# EUROPEAN PATENT APPLICATION

(11) **EP 4 838 191 A1**
(43) Date of publication of application: **11.11.2026**
(21) Application number: 24866573.9
(22) Date of filing: 15.07.2024
(51) Int. Cl.: G01M 3/26

(54) **SECONDARY BATTERY LEAK RATE MEASUREMENT DEVICE**

(30) Priority: 29.12.2023 CN 202323661756 U
(71) Applicant: Wuxi Lead Intelligent Equipment Co., Ltd., Wuxi, Jiangsu 214028 (CN)
(72) Inventor: GUO, Jianfei, Wuxi, Jiangsu 214028 (CN)
(74) Representative: Rau, Schneck & Hübner Patentanwälte Rechtsanwälte PartGmbB
(86) International application number: PCT/CN2024/105407
(87) International publication number: WO 2025/138720

(57) **Abstract**

The present disclosure discloses a leakage inspection device for secondary batteries. The leakage inspection device for secondary batteries comprises a plurality of pressure vessels, an evacuating equipment, a leakage detector and a reference leakage component; the plurality of pressure vessels being connected in parallel, each pressure vessel having a chamber which is configured for accommodating a secondary battery; the evacuating equipment being in communication with the plurality of chambers; the leakage detector being in communication with the plurality of chambers; and the reference leakage component being in communication with a chamber. The leakage inspection device for secondary batteries may inspect the leakage rate of the secondary battery more accurately, effectively preventing misjudgment of secondary batteries with qualified leakage rate as unqualified due to inaccuracies in the leakage rate inspection of the secondary battery. (FIG. 1)

## Description

### CROSS-REFERENCE TO RELATED APPLICATIONS

The present disclosure claims priority to a Chinese patent application No. 202323661756.4 filed with the CNIPA on December 29, 2023 and entitled "LEAKAGE INSPECTION DEVICE FOR SECONDARY BATTERY", which is hereby incorporated by reference in its entirety.

### TECHNICAL FIELD

The present disclosure relates to the technical field of battery leakage rate inspection device, and particularly, to a leakage inspection device for secondary batteries.

### BACKGROUND

In the production of a secondary battery, leak rate inspections are required for square batteries after top cap welding and sealing nail welding. Current leakage inspection devices typically include a pressure vessel for accommodating the secondary battery, an evacuating equipment, and a leakage detector, with the pressure vessel in communication with the evacuating equipment and the leakage detector via pipelines.

However, when using the above leakage inspection device to inspect the secondary battery inside the chamber, the leakage rate value detected by the leakage detector includes the leakage rate values of both the pressure vessel and the pipelines. That is, the detected leakage rate value is the sum of the leakage rate value of the pressure vessel and the pipelines plus the leakage rate value of the secondary battery itself. This results in inaccuracies of the leakage rate value of the secondary battery detected through the leakage inspection device, leading to incorrect evaluations of the leakage rate of the secondary battery, and is liable to misjudgment of the secondary battery with qualified leakage rate as unqualified.

### SUMMARY

Embodiments of the present disclosure discloses a leakage inspection device for secondary batteries, that can detect the leakage rate of the secondary battery more accurately. This effectively prevents misjudgment of the secondary batteries with qualified leakage rate as unqualified due to inaccuracies in the leakage rate value detection of the secondary batteries.

To achieve the above objective, embodiments of the present disclosure discloses a leakage inspection device for secondary batteries, which comprises:
a plurality of pressure vessels connected in parallel, each pressure vessel having a chamber which is configured for accommodating a secondary battery;
an evacuating equipment in communication with the plurality of chambers;
a leakage detector in communication with the plurality of chambers and configured for separately detecting leakage rate values of secondary batteries accommodated in the plurality of chambers; and
a reference leakage component in communication with a chamber and configured for calibrating the leakage rate values detected by the leakage detector.

In a possible implementation, the leakage detector is in respective communication with the plurality of chambers via a plurality of check valves, and the plurality of check valves are provided in one-to-one correspondence with the plurality of chambers.

In a possible implementation, the evacuating equipment is in respective communication with the plurality of chambers via a plurality of vacuum valves, and the plurality of vacuum valves are provided in one-to-one correspondence with the plurality of chambers.

In a possible implementation, the evacuating equipment is in respective communication with the chambers of the plurality of pressure vessels via a first main pipe and a plurality of first branch pipes, the first main pipe is connected to the evacuating equipment at one end, and is connected to the plurality of first branch pipes respectively at the other end, the plurality of first branch pipes are in one-to-one communication with the chambers of the plurality of pressure vessels, and each of first branch pipes is provided with the vacuum valve;
the leakage detector is in respective communication with the chambers of the plurality of pressure vessels via a second main pipe and a plurality of second branch pipes, the second main pipe is connected to the leakage detector at one end, and is connected to the plurality of second branch pipes respectively at the other end, the plurality of second branch pipes are in one-to-one communication with the plurality of first branch pipes, and each of the second branch pipes is provided with the check valve.

In a possible implementation, there are provided a plurality of reference leakage components, the plurality of reference leakage components are in one-to-one communication with the chambers of the plurality of pressure vessels, and each reference leakage component and its corresponding chamber are provided with a reference leakage valve therebetween.

In a possible implementation, the pressure vessel comprises a fixed chamber and a movable chamber which together form the chamber, the fixed chamber is fixedly provided, while the movable chamber is movably provided relative to the fixed chamber, allowing placement of the secondary battery into the movable chamber or the fixed chamber when the movable chamber is separated from the fixed chamber, and the evacuating equipment, the leakage detector, and the reference leakage component are all connected to the fixed chamber.

In a possible implementation, the leakage inspection device for secondary batteries further comprises a transferring module, which is connected to the movable chamber for driving the movable chamber towards or away from the fixed chamber.

In a possible implementation, each of the pressure vessels has a plurality of chambers which are independent of each other.

In a possible implementation, a vacuum breaker valve is connected between the evacuating equipment and the chamber.

In a possible implementation, the vacuum breaker valve is connected to a silencer.

Compared with the prior art, the present disclosure has at least the following beneficial effects:
In the present disclosure, a plurality of pressure vessels are connected in parallel, each having a chamber for accommodating a secondary battery, enabling the plurality of secondary batteries to be simultaneously placed within the chambers of the pressure vessels. Additionally, the evacuating equipment is in communication with a plurality of chambers, allowing it to simultaneously evacuate the plurality of chambers. Compared to a configuration where one evacuating equipment is in communication with one chamber, this arrangement significantly improves the efficiency of evacuating the plurality of secondary batteries, thereby enhancing the leakage inspection efficiency for the plurality of secondary batteries.

The leakage detector is in communication with the plurality of chambers, such that after evacuation of the plurality of chambers accommodating the secondary batteries, it is possible to perform leakage rate inspection on the secondary batteries in the chambers one by one by means of the leakage detector to obtain the leakage rate values of the secondary batteries. Compared to a configuration where each chamber is correspondingly connected to one leakage detector, this arrangement effectively reduces the number of leakage detectors, thereby reducing costs.

In addition, the leakage inspection device for secondary batteries further comprises a reference leakage component, which is in communication with the chamber, such that before the secondary battery is placed in the chamber to perform the leakage rate inspection on the secondary battery, the leakage rate inspection may be first performed on the reference leakage component in the leakage inspection device for secondary batteries so as to obtain the leakage rate value detected by the reference leakage component in the leakage inspection device for secondary batteries is obtained; then, the leakage rate value detected by the reference leakage component may be compared with the reference leakage rate value of the reference leakage component to obtain a correction coefficient "a", where "a" = reference leakage rate value/detected leakage rate value", so as to complete calibration, such that when the leakage rate inspection is performed on the secondary battery and the detected leakage rate value of the secondary battery is obtained, an actual leakage rate value of the secondary battery may be obtained by multiplying the detected leakage rate value of the secondary battery by the correction coefficient, which effectively improves the accuracy of the leakage rate inspection on the secondary battery, and prevents misjudgment of secondary batteries with qualified leakage rate as unqualified due to inaccuracies in the leakage rate inspection of the secondary battery.

### BRIEF DESCRIPTION OF THE DRAWINGS

In order to more clearly illustrate technical solution of embodiments of the present disclosure, accompanying drawings that need to be used in description of the embodiments will be briefly introduced as follows. Obviously, drawings in following description are only some embodiments of the present disclosure. For those skilled in the art, other drawings can also be obtained according to the disclosed drawings without creative efforts.
FIG. 1 is a structural schematic diagram of a leakage inspection device for secondary batteries according to an embodiment of the present disclosure;
FIG. 2 is a structural schematic diagram of a leakage inspection device for secondary batteries provided with an evacuating equipment and a leakage detector according to an embodiment of the present disclosure;
FIG. 3 is a structural schematic diagram of a leakage inspection device for secondary batteries further provided with a reference leakage component according to an embodiment of the present disclosure;
FIG. 4 is a structural schematic diagram of a leakage inspection device for secondary batteries further provided with a vacuum breaker valve and a silencer according to an embodiment of the present disclosure.

Description of reference signs:
1-pressure vessel; 11-chamber; 12-fixed chamber; 13-movable chamber; 2a-evacuating equipment; 2b-vacuum valve; 2c-first main pipe; 2d-first branch pipe; 3a-leakage detector; 3b-check valve; 3c-second main pipe; 3d-second branch pipe; 4a-reference leakage component; 4b-reference leakage valve; 5-transferring module; 6-vacuum breaker valve; 7-silencer;
10-leakage inspection device for secondary batteries.

### DETAILED DESCRIPTION

The following description will clearly and completely describe the technical solutions in the embodiments of the present disclosure in conjunction with the drawings in the embodiments of the present disclosure. Obviously, the described embodiments are only part of the embodiments of the present disclosure, not all of them. Based on the embodiments in the present disclosure, all other embodiments obtained by those skilled in the art without creative labor fall within the scope of protection of the present disclosure.

In the present disclosure, an orientation or positional relationship indicated by terms "up", "down", "left", "right", "front", "back", "top", "bottom", "inner", "outer", "vertical", "horizontal", "transverse", "longitudinal", etc., is based on the orientation or positional relationship shown in the accompanying drawings. These terms are mainly intended to better describe the present disclosure and its embodiments, rather than to limit that the indicated devices, components, or parts must have specific orientations or be constructed and operated in specific orientations.

Moreover, some of these terms may also be used to indicate other meanings besides indicating orientation or positional relationships. For example, the term "up" may also indicate a certain attachment relationship or connection relationship in certain cases. Those skilled in the art may understand the specific meanings of these terms in the present disclosure according to specific situations.

In addition, terms "installed", "disposed", "provided with", "connected", and "in communication with" should be interpreted in a broad sense. For example, it can be a fixed connection, a detachable connection, or an integrated construction; it can be a mechanical connection or an electrical connection; it can be directly connected, or indirectly connected through an intermediate medium, and it can be an internal communication between two devices, elements or parts. For those of ordinary skill in the art, specific meanings of the above terms in the present disclosure can be understood according to specific situations.

In addition, terms such as "first", "second", etc., are mainly used to distinguish different devices, elements, or parts (which may be the same or different in specific types and structures), and do not imply or suggest relative importance and quantity of the indicated devices, elements, or parts. Unless otherwise stated, the term "plurality" means two or more.

Embodiments of the present disclosure discloses a leakage inspection device for secondary batteries, which may inspect the leakage rate of the secondary battery more accurately, effectively preventing misjudgment of secondary batteries with qualified leakage rate as unqualified due to inaccuracies in the leakage rate inspection of the secondary battery.

The technical solutions of the present disclosure will be described in detail below in connection with specific embodiments and the accompanying drawings.

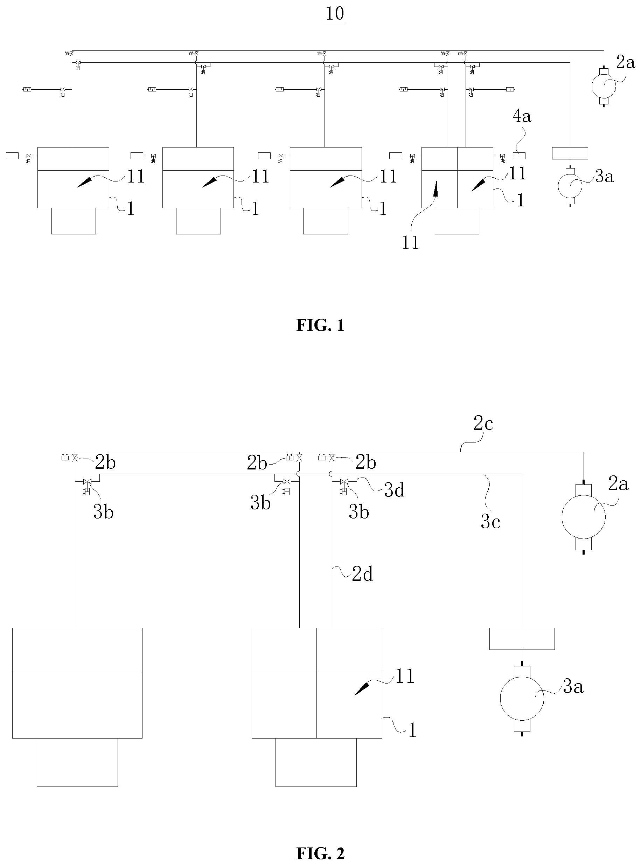

Embodiments of the present disclosure provide a leakage inspection device for secondary batteries, which as shown in FIG. 1, comprises a plurality of pressure vessels 1, an evacuating equipment 2a, a leakage detector 3a and a reference leakage component 4a. Here, the plurality of pressure vessels 1 are connected in parallel, each pressure vessel 1 has a chamber 11 which is configured for accommodating a secondary battery; the evacuating equipment 2a is in communication with the plurality of chambers 11; the leakage detector 3a is in communication with the plurality of chambers 11 and configured for separately detecting leakage rate values of secondary batteries accommodated in the plurality of chambers 11; and the reference leakage component 4a is in communication with the plurality of chambers 11 and configured for calibrating the leakage rate values detected by the leakage detector 3a.

The above plurality of pressure vessels 1 are connected in parallel, each having a chamber 11 for accommodating the secondary battery, enabling the plurality of secondary batteries to be simultaneously placed within the chambers of the plurality of pressure vessels 1. Additionally, the evacuating equipment 2a is in communication with a plurality of chambers 11, allowing it to simultaneously evacuate the plurality of chambers 11. Compared to a configuration where one evacuating equipment 2a is in communication with one chamber 11, this arrangement significantly improves the efficiency of evacuating the plurality of secondary batteries, thereby enhancing the leakage inspection efficiency for the plurality of secondary batteries.

The leakage detector 3a is in communication with the plurality of chambers 11, such that after evacuation of the plurality of chambers 11 accommodating the secondary batteries, it is possible to perform leakage rate inspection on the secondary batteries in the chambers 11 one by one by means of the leakage detector 3a to obtain the leakage rate values of the secondary batteries. Compared to a configuration where each chamber 11 is correspondingly connected to one leakage detector 3a, this arrangement effectively reduces the number of leakage detectors 3a, thereby reducing costs.

It should be explained that the leakage rate is the amount of gas leaked per second.

When the leakage rate inspection is performed on the secondary battery in the chamber 11 by the leakage detector 3a, since the leakage detector 3a is connected to the chamber 11, the leakage rate value detected by the leakage detector 3a generally comprises the leakage rate value of the chamber 11 and the leakage rate value of the secondary battery; or when the leakage detector 3a is in communication with the chamber 11 through a pipeline, the leakage rate value detected by the leakage detector 3a comprises the leakage rate value of the chamber 11, the leakage rate value of the pipeline, and the leakage rate value of the secondary battery. This results in that the leakage rate value directly read from the leakage detector 3a not being the actual leakage rate value of the secondary battery, leading to lower accuracy of the leakage rate inspection on the secondary battery, and thus results in that the secondary battery with a qualified leakage rate being liable to be misjudged as unqualified, thereby causing in over-inspection on the secondary battery.

Based on this, the leakage inspection device 10 for a secondary battery of the present disclosure further comprises a reference leakage component 4a, which is in communication with the chamber 11, such that before the secondary battery is placed in the chamber 11 to perform the leakage rate inspection on the secondary battery, the leakage rate inspection may be first performed on the reference leakage component 4a in the leakage inspection device 10 for a secondary battery so as to obtain the leakage rate value detected by the reference leakage component 4a in the leakage inspection device 10 for a secondary battery is obtained; then, the leakage rate value detected by the reference leakage component 4a may be compared with the reference leakage rate value of the reference leakage component 4a to obtain a correction coefficient "a", where "a" = reference leakage rate value/detected leakage rate value, so as to complete calibration, such that when the leakage rate inspection is performed on the secondary battery and the detected leakage rate value of the secondary battery is obtained, an actual leakage rate value of the secondary battery may be obtained by multiplying the detected leakage rate value of the secondary battery by the correction coefficient, which effectively improves the accuracy of the leakage rate inspection on the secondary battery, and prevents misjudgment of secondary batteries with qualified leakage rate as unqualified due to inaccuracies in the leakage rate inspection of the secondary battery.

As an example, when calibrating the leakage detector 3a using the reference leakage component 4a, first seal the chamber 11, then evacuate the chamber 11 using the evacuating equipment 2a until the air pressure in the chamber 11 is between 8 Pa and 10 Pa, and then stop the operation of evacuating the chamber 11. Next, turn on the leakage detector 3a so that the leakage detector 3a is in communication with the chamber 11 after being evacuated, read the leakage rate value detected by the leakage detector, and if the detected leakage rate value is within the range of the preset leakage rate value, turn on the reference leakage component 4a. After the reading of the leakage detector 3a is stable, read the detected leakage rate value detected by the leakage detector 3a, and then turn off the reference leakage component 4a. Finally, compare the detected leakage rate value of the reference leakage component 4a with a reference leakage rate value of the reference leakage component 4a, that is, the correction coefficient "a" is obtained by using the formula " a = reference leakage rate value/detected leakage rate value ".

When detecting the leakage rate of the secondary battery, place the secondary battery into the pressure vessel 1 which has been calibrated, and then seal the chamber 11. Evacuate the chamber 11 containing the secondary battery using evacuating equipment 2a until the air pressure in the chamber 11 is between 8 Pa and 10 Pa, then stop the evacuation operation. Next, turn on the leakage detector 3a so that the leakage detector 3a is in communication with the chamber 11 after being evacuated, read the detected leakage rate value of the secondary battery detected by the leakage detector 3a, and multiply the detected leakage rate value of the secondary battery by a correction coefficient a, thereby obtaining an actual leakage rate value of the secondary battery.

It should be noted that since there are differences in the leakage rates of various pressure vessels 1 and the environments in which they are located, it is necessary for each pressure vessel 1 to be calibrated and standardized separately, to ensure that the leakage rate value of the secondary battery in each pressure vessel 1 are more accurate.

The number of the pressure vessels 1 may be two, three or more, which is not limited herein.

The leakage detector 3a may be any one of a hydrogen detector, a helium detector, and the like, which is not limited herein.

The gas in the reference leakage component 4a may be adapted to the gas that may be detected by the leakage detector 3a, for example, when the leakage detector 3a is the hydrogen detector, the gas in the reference leakage component 4a may contain a hydrogen component; when the leakage detector 3a is the helium detector, the gas component in the reference leakage component 4a may contain helium.

Here, the hydrogen detector is a mass spectrometric detection equipment for detecting the gas containing hydrogen, and determines the gas leakage amount of the detected object in unit time by performing mass spectrometric analysis on the gas containing hydrogen leaked from the detected object, that is, determines the leakage rate of the detected object. Similarly, the helium detector is a kind of mass spectrometry detection equipment for detecting the gas containing helium, which determines the gas leakage amount of the detected object in unit time by performing mass spectrometry analysis on the gas containing helium leaked from the detected object, that is, determines the leakage rate of the detected object.

In some embodiments, as shown in FIG. 2, the leakage detector 3a is in respective communication with the plurality of chambers 11 via a plurality of check valves 3b, and the plurality of check valves 3b are provided in one-to-one correspondence with the plurality of chambers 11.

Therefore, by arranging the plurality of check valves 3b in one-to-one correspondence with the plurality of chambers 11, the chamber 11 of each pressure vessel 1 may independently execute the leakage rate inspection by the leakage detector 3a, which facilitates detection of the leakage rate of the secondary battery in the plurality of pressure vessels 1.

Here, the check valve 3b may be any one of a ball valve, a butterfly valve, a gate valve and the like, which is not limited herein.

Optionally, as shown in FIG. 2, the vacuum-pumping equipment 2a is in respective communication with the plurality of chambers 11 via a plurality of vacuum valves 2b, and the plurality of vacuum valves 2b are provided in one-to-one correspondence with the plurality of chambers 11.

Therefore, by arranging the plurality of vacuum valves 2b in one-to-one correspondence with the chambers 11 of the plurality of pressure vessels 1, the chamber 11 of each pressure vessel 1 may be evacuated independently by the evacuating equipment 2a, so that when one chamber 11 or some of the chambers 11 are required to be used, the chamber 11 or some of the chambers 11 required to be used may be separately evacuated, thereby facilitating the evacuating operation of a plurality of chambers 11.

Here, the vacuum valve 2b may be any one of a ball valve, a butterfly valve, and a gate valve, which is not limited herein.

As shown in FIG. 2, the vacuum-pumping equipment 2a is in respective communication with the chambers 11 of the plurality of pressure vessels 1 via a first main pipe 2c and a plurality of first branch pipes 2d, the first main pipe 2c is connected to the vacuum-pumping equipment 2a at one end, and is connected to the plurality of first branch pipes 2d respectively at the other end, the plurality of first branch pipes 2d are in one-to-one communication with the chambers 11 of the plurality of pressure vessels 1, and each of first branch pipes 2d is provided with the vacuum valve 2b; the leakage detector 3a is in respective communication with the chambers 11 of the plurality of pressure vessels 1 via a second main pipe 3c and a plurality of second branch pipes 3d, the second main pipe 3c is connected to the leakage detector 3a at one end, and is connected to the plurality of second branch pipes 3d respectively at the other end, the plurality of second branch pipes 3d are in one-to-one communication with the plurality of first branch pipes 2d, and each of the second branch pipes 3d is provided with the check valve 3b.

Therefore, by providing one opening in the pressure vessel 1 for communicating with the chamber 11 to enable the chamber 11 to be in communication with the evacuating equipment 2a via the first main pipe 2c and the first branch pipes 2d and to enable the chamber 11 to be in communication with the leakage detector 3a via the second main pipe 3c and the second branch pipes 3d. Compared to a configuration where openings are provided in the pressure vessel 1 for connecting with the evacuating equipment 2a and the leakage detector 3a, this arrangement effectively reduces the processing difficulty of the pressure vessel 1, reduce the number of pipelines, and reduce the occupied space and the arrangement difficulty of the pipelines, thereby reducing the manufacturing difficulty of the leakage inspection device 10 for a secondary battery.

Here, the communication between the second branch pipe 3d and the first branch pipe 2d may be realized through a quick connector, so that the connection between the second branch pipe 3d and the first branch pipe 2d is simple and convenient.

In addition, the vacuum valve 2b is located on the first branch pipe 2d between the junction of the first branch pipe 2d and the second branch pipe 3d and the junction of the first branch pipe 2d and the first main pipe 2c, so that the vacuum valve 2b and the check valve 3b are turned on independently of each other.

Certainly, in other embodiments, the evacuating equipment 2a may be in respective communication with the chambers 11 of the plurality of pressure vessels 1 via the first main pipe 2c and the plurality of first branch pipes 2d, one end of the first main pipe 2c is connected to the evacuating equipment 2a, the other end thereof is respectively connected to the plurality of first branch pipes 2d, the plurality of first branch pipes 2d are in one-to-one communication with the chambers 11 of the plurality of pressure vessels 1, and each first branch pipe 2d is provided with a vacuum valve 2b; the leakage detector 3a is in respective communication with the chambers 11 of the plurality of pressure vessels 1 via the second main pipe 3c and the plurality of second branch pipes 3d, one end of the second main pipe 3c is connected to the leakage detector 3a, the other end thereof is respectively connected to the plurality of second branch pipes 3d, the plurality of second branch pipes 3d are in one-to-one communication with the chambers 11 of the plurality of pressure vessels 1, and each second branch pipe 3d is provided with a check valve 3b. That is, the vacuum valves 2b and the leakage detector 3a are in respective communication with the chamber 11 of the pressure vessel 1 via independent pipelines.

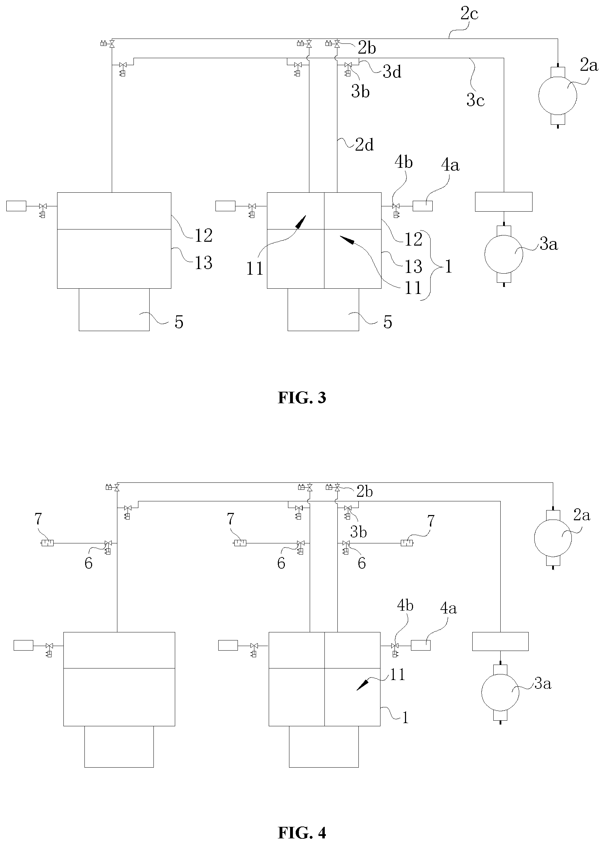

In some embodiments, as shown in FIG. 3, there are provided a plurality of reference leakage components 4a, the plurality of reference leakage components 4a are in one-to-one communication with the chambers 11 of the plurality of pressure vessels 1, and each reference leakage component 4a and a corresponding chamber 11 are provided with a reference leakage valve 4b therebetween.

Therefore, with the help of the corresponding reference leakage component 4a, it is possible to easily calibrate and standardize the chamber 11 of each pressure vessel 1, or the chamber 11 of each pressure vessel 1 and its pipeline connected to the chamber 11, so as to obtain a correction coefficient with high accuracy, so that the secondary battery placed in each pressure vessel 1 may be detected to obtain a leakage rate value with high accuracy.

Here, the plurality of reference leakage components 4a are in one-to-one communication with the chambers 11 of the plurality of pressure vessels 1, and may be reference leakage openings provided in the pressure vessel 1 for communication with the chambers 11. A reference leakage pipeline is connected between the reference leakage opening in the pressure vessel 1 and its corresponding reference leakage component 4a, and the reference leakage valve 4b is provided in the reference leakage pipeline, making the structure simple and easy to realize.

Of course, in other embodiments, the number of the reference leakage component 4a may be one, and the reference leakage component 4a is in communication with a chamber 11 of the plurality of pressure vessels 1 via a plurality of pipelines, and the plurality of pipelines are in one-to-one communication with the plurality of pressure vessels 1, and the reference leakage valve 4b is provided on each pipeline, so that it is possible to reduce the number of the reference leakage component 4a, as well as the cost.

In some embodiments, as shown in FIG. 3, the pressure vessel 1 comprises a fixed chamber 12 and a movable chamber 13 which together form the chamber 11, the fixed chamber 12 is fixedly provided, while the movable chamber 13 is movably provided relative to the fixed chamber 12, allowing placement of the secondary battery into the movable chamber 13 or the fixed chamber 12 when the movable chamber 13 is separated from the fixed chamber 12, and the vacuum-pumping equipment 2a, the leakage detector 3a, and the reference leakage component 4a are all connected to the fixed chamber 12.

Therefore, by connecting each of the evacuating equipment 2a, the leakage detector 3a, and the reference leakage component 4a to the fixed chamber 12, it is possible that the pipelines connecting the evacuating equipment 2a, the leakage detector 3a and the reference leakage component 4a to the pressure vessel 1 is not influenced by placing or removing the secondary battery into/from the chamber 11, that is, it is possible that the pipelines connecting the evacuating equipment 2a, the leakage detector 3a and the reference leakage component 4a to the pressure vessel 1 are less likely to move, which facilitates the pipeline layout and thus reduces the complexity of manufacturing the leakage inspection device 10 for a secondary battery.

Here, when the fixed chamber 12 and the movable chamber 13 form the chamber 11, the fixed chamber 12 and the movable chamber 13 may be threaded together by means of a screw thread pair, making it easy to assemble and disassemble the fixed chamber 12 and the movable chamber 13. A sealing ring may be provided between the fixed chamber 12 and the movable chamber 13, so that the chamber 11 formed by the fixed chamber 12 and the movable chamber 13 has good sealing performance.

In addition, the secondary battery is placed into the movable chamber 13 or the fixed chamber 12 when the movable chamber 13 is separated from the fixed chamber 12. It is possible that the secondary battery is placed into the movable chamber 13 when the movable chamber 13 is separated from the fixed chamber 12, and for example, when the movable chamber 13 is located below the fixed chamber 12 in the vertical direction, the secondary battery may be placed into the movable chamber 13; alternatively, the secondary battery is placed into the fixed chamber 12 when the movable chamber 13 is separated from the fixed chamber 12, and for example, when the fixed chamber 12 is located below the movable chamber 13 in the vertical direction, the secondary battery may be placed into the fixed chamber 12, which is not limited herein, and may be selected according to the actual situation.

The movable chamber 13 is movably provided relative to the fixed chamber 12, and the movable chamber 13 may be manually moved away from or close to the fixed chamber 12; alternatively, the movable chamber 13 may be driven to move away from or close to the fixed chamber 12 by a conveying device, which is not limited herein.

Optionally, as shown in FIG. 3, the leakage inspection device 10 for a secondary battery further comprises a transferring module 5, which is connected to the movable chamber 13 for driving the movable chamber 13 towards or away from the fixed chamber 12.

Therefore, it is possible that the movement of the movable chamber 13 relative to the fixed chamber 12 saves time and labor, to improve the efficiency of placing or removing the secondary battery into/from the chamber 11, and thus to effectively improve the leakage inspection efficiency of the leakage inspection device 10 for a secondary battery.

Here, the transferring module 5 may be implemented in various ways. For example, the transferring module 5 may comprise a linear motor and a manipulator, the driving end of the linear motor is connected to the manipulator, and the manipulator is used for clamping the movable chamber 13, so that when the linear motor drives the manipulator to move, the movable chamber 13 may be driven to move in a direction away from or close to the fixed chamber 12, enabling precise control over the movement distance of the movable chamber 13. Alternatively, the transferring module 5 may comprise an air cylinder, with a piston rod of the air cylinder connected to the movable chamber 13, so that the movable chamber 13 is driven to move in a direction close to or far away from the fixed chamber 12 when the piston rod is extended out or retracted, the structure of which is simple and easy to realize; of course, the transferring module 5 may also be implemented in other ways, which is not limited herein.

The number of chambers 11 per pressure vessel 1 described above may be one or more. In some embodiments, as shown in FIG. 3, one pressure vessel 1 may have a plurality of chambers 11 which are independent of each other.

Therefore, a plurality of secondary batteries may be placed into the pressure vessel 1 at one time, and the plurality of secondary batteries may be respectively placed in the plurality of chambers 11 which are independent of each other. This allows that the vacuum environment in which the plurality of secondary batteries are located and the detected leakage rate value are not mutually influenced, and the leakage inspection efficiency for the plurality of secondary batteries is effectively improved.

Here, the plurality of chambers 11 of one pressure vessel 1 are in respective communication with the evacuating equipment 2a, the leakage detector 3a and the reference leakage component 4a via corresponding pipelines, such that the leakage rate inspection on the secondary battery in each chamber 11 is not influenced by other chambers 11, which effectively improves the accuracy of the leakage inspection on the secondary battery by the leakage inspection device 10 for a secondary battery.

In addition, the number of chambers 11 that one pressure vessel 1 may have may be two, three, or more, which is not limited herein.

In some other embodiments, one pressure vessel 1 may have one chamber 11, which makes the structure of the pressure vessel 1 relatively simple, and reduces the difficulty of manufacturing the pressure vessel 1.

In some embodiments, as shown in FIG. 4, a vacuum breaker valve 6 is connected between the evacuating equipment 2a and the chamber 11.

Therefore, by adjusting the vacuum degree in the chamber 11 and the vacuum degree in the pipeline communicated between the evacuating equipment 2a and the chamber 11 by means of the vacuum breaker valve 6 so that the air pressure of the vacuum environment where the secondary battery placed in the chamber 11 is located may be relatively stable, it is possible that the leakage rate value detected by the leakage detector 3a is not liable to be affected by the air pressure, and further to improve the accuracy of leakage rate inspection on the secondary battery.

Here, the vacuum breaker valve 6 may be any one of a manual vacuum breaker valve 6 and an electromagnetic control vacuum breaker valve 6, which is not limited herein.

When the evacuating equipment 2a is in respective communication with the chambers 11 of the plurality of pressure vessels 1 via the first main pipe 2c and the plurality of first branch pipes 2d, the number of the vacuum breaker valve 6 may be more than one. Each first branch pipe 2d may be provided with one vacuum breaker valve 6, so that the pressure of the vacuum environment in which the secondary battery in each chamber 11 is located may be relatively stable.

Optionally, as shown in FIG. 4, the vacuum breaker valve 6 is connected to a silencer 7.

Therefore, it is possible to effectively reduce the noise of the vacuum breaker valve 6 when the valve is opened to control the gas to flow in and out, to prevent the leakage inspection device 10 for a secondary battery from producing large noise in use, and thus to provide a better working environment for a staff.

Lastly, it should be noted that the above embodiments are provided solely for illustrating the technical solutions of the present disclosure and not for limiting them. Although detailed explanations to the present disclosure has been given with reference to the foregoing embodiments, a person of ordinary skill in the art should understand that modifications can still be made to the technical solutions described in the foregoing embodiments, or equivalent substitutions can be made for some or all of the technical features therein. These modifications or substitutions do not deviate from the essential scope of the corresponding technical solutions as defined by the embodiments of the present disclosure.

## Claims

1. A leakage inspection device for secondary batteries, **characterized by** comprising:
a plurality of pressure vessels (1) connected in parallel, each pressure vessel (1) having a chamber (11) which is configured for accommodating a secondary battery;
an evacuating equipment (2a) in communication with the plurality of chambers (11);
a leakage detector (3a) in communication with the plurality of chambers (11) and configured for separately detecting leakage rate values of secondary batteries accommodated in the plurality of chambers (11); and
a reference leakage component (4a) in communication with a chamber (11) and configured for calibrating the leakage rate values detected by the leakage detector (3a).

2. The leakage inspection device for secondary batteries according to claim 1, **characterized in that** the leakage detector (3a) is in respective communication with the plurality of chambers (11) via a plurality of check valves (3b), and the plurality of check valves (3b) are provided in one-to-one correspondence with the plurality of chambers (11).

3. The leakage inspection device for secondary batteries according to claim 2, **characterized in that** the evacuating equipment (2a) is in respective communication with the plurality of chambers (11) via a plurality of vacuum valves (2b), and the plurality of vacuum valves (2b) are provided in one-to-one correspondence with the plurality of chambers (11).

4. The leakage inspection device for secondary batteries according to claim 3, **characterized in that**:
the evacuating equipment (2a) is in respective communication with the chambers (11) of the plurality of pressure vessels (1) via a first main pipe (2c) and a plurality of first branch pipes (2d), the first main pipe (2c) is connected to the evacuating equipment (2a) at one end, and is connected to the plurality of first branch pipes (2d) respectively at the other end, the plurality of first branch pipes (2d) are in one-to-one communication with the chambers (11) of the plurality of pressure vessels (1), and each of first branch pipes (2d) is provided with the vacuum valve (2b);
the leakage detector (3a) is in respective communication with the chambers (11) of the plurality of pressure vessels (1) via a second main pipe (3c) and a plurality of second branch pipes (3d), the second main pipe (3c) is connected to the leakage detector (3a) at one end, and is connected to the plurality of second branch pipes (3d) respectively at the other end, the plurality of second branch pipes (3d) are in one-to-one communication with the plurality of first branch pipes (2d), and each of the second branch pipes (3d) is provided with the check valve (3b).

5. The leakage inspection device for secondary batteries according to any one of claims 1 to 4, **characterized in that** there are provided a plurality of reference leakage components (4a), the plurality of reference leakage components (4a) are in one-to-one communication with the chambers (11) of the plurality of pressure vessels (1), and each reference leakage component (4a) and its corresponding chamber (11) are provided with a reference leakage valve (4b) therebetween.

6. The leakage inspection device for secondary batteries according to any one of claims 1 to 5, **characterized in that** the pressure vessel (1) comprises a fixed chamber (12) and a movable chamber (13) which together form the chamber (11), the fixed chamber (12) is fixedly provided, while the movable chamber (13) is movably provided relative to the fixed chamber (12), allowing placement of the secondary battery into the movable chamber (13) or the fixed chamber (12) when the movable chamber (13) is separated from the fixed chamber (12), and the evacuating equipment (2a), the leakage detector (3a), and the reference leakage component (4a) are all connected to the fixed chamber (12).

7. The leakage inspection device for secondary batteries according to claim 6, **characterized in that** the leakage inspection device (10) for a secondary battery further comprises a transferring module (5), which is connected to the movable chamber (13) for driving the movable chamber (13) towards or away from the fixed chamber (12).

8. The leakage inspection device for secondary batteries according to any one of claims 1 to 7, **characterized in that** each of the pressure vessels (1) has a plurality of chambers (11) which are independent of each other.

9. The leakage inspection device for secondary batteries according to any one of claims 1 to 7, **characterized in that** a vacuum breaker valve (6) is connected between the evacuating equipment (2a) and the chamber (11).

10. The leakage inspection device for secondary batteries according to claim 9, **characterized in that** the vacuum breaker valve (6) is connected to a silencer (7).
